# EUROPEAN PATENT SPECIFICATION

(11) **EP 1 188 360 B1**
(45) Date of publication and mention of the grant of the patent: **07.12.2005**
(21) Application number: 01203405.4
(22) Date of filing: 10.09.2001
(51) Int. Cl.: A01C 5/06, A01C 23/02

(54) **Manuring disc**
Scheibe für Jauchedrill
Disque pour enfouisseur de lisier

(30) Priority: 08.09.2000 NL 1016130
(43) Date of publication of application: 20.03.2002
(73) Proprietor: Schuitemaker Machines B.V., NL-7461 AG Rijssen (NL)
(72) Inventor: Bouwhuis, Hendrik, 7641 AG Wieden (NL); te Boekhorst, Paulus, Andreas, J., 7434 SJ Lettele (NL)
(74) Representative: Prins, Adrianus Willem

(56) References cited:
- EP-A- 0 551 161
- DE-C- 290 919
- DE-C- 322 568

## Description

The invention relates to a manuring disc having a cutting edge V-shaped in cross section, for use in a manuring apparatus of the type having a number of juxtaposed discs operatively forming grooves in the soil, and having nozzles arranged behind the discs for supplying manure to the grooves formed by the discs. The invention also relates to a manuring apparatus provided with one or more of such manuring discs.

Manuring apparatuses provided with manuring discs are known from practice and from various literature reference, such as, for instance, European patent 0551161. The known discs are typically solid steel discs having a thickness in the order of 20-40 mm and a diameter in the order of about 35 cm. A drawback of the known discs is that they are relatively heavy. This has consequences for the suspension frame of the discs and also for the weight and the suspension frame of the total manuring apparatus.

Another drawback is that in the known discs and apparatuses, the groove depth is sometimes difficult to regulate.

The object of the invention is to obviate the drawbacks outlined and generally to provide a relatively light, reliable and effective manuring disc and manuring apparatus.

A manuring disc of the above-described type is characterized, according to the invention, in that the manuring disc has a relatively thin cutting body having a cutting edge arrowhead-shaped in cross section, the arrowhead shape having a sharp circumferential edge and shoulders wider than the thickness of the disc body, while replaceable supporting edges extending outwards from the shoulders are provided, which supporting edges are attached to the disc body.

It is observed that DE-C-322568 discloses a sowing-disc for a sowing-machine, said disc being intended for making sowing-grooves in sowing land in which grooves sowing-seed will be distributed. This prior art disc has a wedge-shaped circumferential area for forming the grooves in the sowing-land. The disc has shoulders in use providing a limited depth of the sowing-grooves.

However, the known disc has a blunt, rounded circumferential edge, thus making the disc unsuited to be used as a manuring disc for cutting grooves in the ground of other types of land than sowing-land, like for instance grass-land. Further, the sowing-disc of DE-C-322568 is a single-piece solid disc, which just as the discs disclosed in EP 0551161 is rather heavy and therefore, if used as manuring disc, would have similar drawbacks as mentioned above in connection with EP 0551161.

In the following, the invention is further described with reference to the appended drawing of an exemplary embodiment.

Fig. 1 shows schematically in longitudinal section an example of an manuring disc according to the invention.

Fig. 2 shows schematically in cross section an example of a variant of the invention.

The manuring disc 1 shown, also referred to as coulter disc, has a central hub part 2, which, in mounted condition of the disc, is secured on a shaft, not shown. The hub part 2 is relatively thick and can have a thickness, for instance, in the order of about 25 mm. Extending around the hub part is a disc-shaped flange 3 which, in this example, is integral with the hub part 2.

In this example, the flange has a considerably lesser thickness than the hub part. The flange thickness d can be, for instance, in the order of about 6 mm.

The disc-shaped flange is provided at the circumference thereof with a cutting edge 4 which is arrowhead-shaped in cross section. The cutting edge 4 has a sharp circumferential edge 5. From the sharp circumferential edge 5, the cutting edge 4 widens in the direction of the flange 3 and thereby forms shoulders 6 adjacent the transition to the flange 3, on opposite sides of the flange. The apical angle α of the arrowhead shape could, in a practical example, be from about 18° to 30°. In the example shown, the apical angle α is 23°.

Linking up with the shoulders 6 on opposite sides of the disc are supporting edges 7. In this example, the supporting edges have sections 8 arching outwards from the shoulders 6, which sections 8 link up with sections 9, which in this example extend substantially parallel to the flange 3 over some distance in the direction of the hub part 2.

The arched sections in practice form supporting surfaces, by which the discs are supported on the soil at the maximum cutting depth. Of course, the sections 8 can also have a different suitable shape. Under normal working conditions, the sections 9 do not penetrate into the ground. The sections 9 do not necessarily need to be parallel to each other and to the flange 3, but may also extend obliquely outwards or inwards.

The sections 9 in turn link up with sections 10, which extend from the sections 9 to the flange 3 and which continue into sections 11 extending along the flange in the direction of the hub part.

The sections 11 are suitably, preferably detachably, fastened to the flange 3. In the example shown, bolts and nuts 12 are used.

The ends of the arched sections 8 proximal to the shoulders 6 of the arrowhead shape are preferably, as shown, received in a form-closing manner in a recess 14 along the outer edge of the shoulders 6.

What is achieved through the use of a manuring disc of the type described is that the maximum cutting depth can be controlled better. In fact, the maximum depth is limited by the disc itself and in particular by the outwardly extending sections 8. This advantage is manifest especially if the soil is wet.

Separate slides or running wheels to set the depth can be omitted, which leads to a simpler and also lighter construction of the manuring apparatus. Further, the discs themselves are lighter than the traditional solid discs.

Also, through the use of the supporting edges, less fouling of the discs occurs. In particular, the central disc portion between the supporting edges remains cleaner.

If necessary, in the event of damage, the supporting edges can be readily replaced.

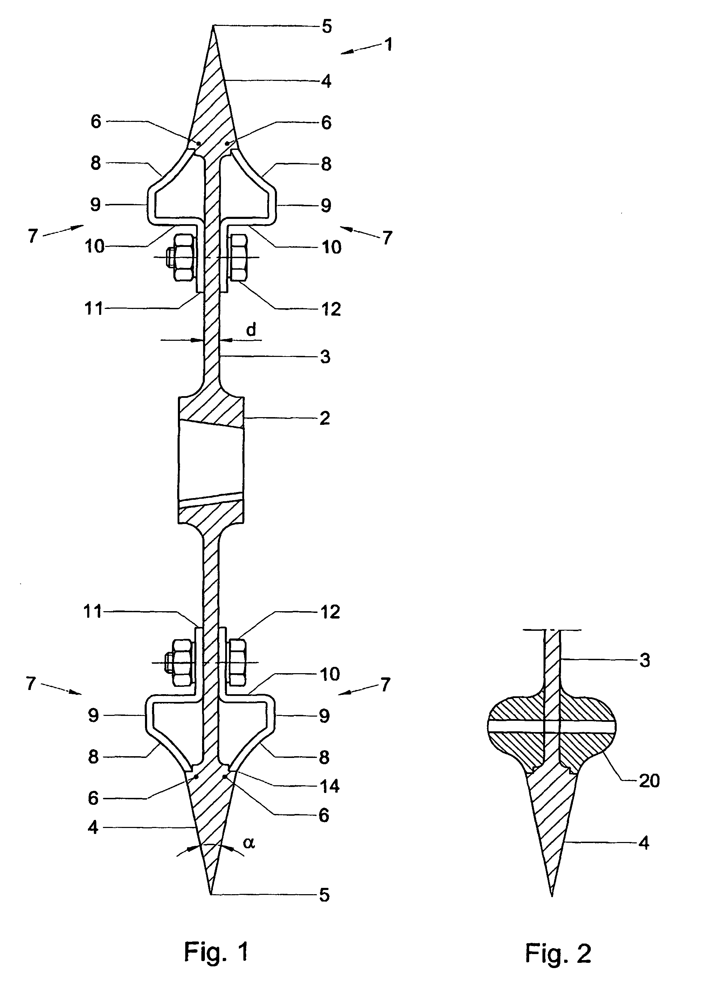

The supporting edges 7 can be manufactured from plate material, for instance steel plate, but also from other suitable materials, such as, for instance, plastic. In the latter case, a greater wall thickness could be desirable. The supporting edges could even be substantially solid, in the case of plastic, with or without a reinforced skin. An example of solid supporting edges is schematically shown at 20 in Fig. 2.

After the foregoing, these and similar modifications will readily occur to those skilled in the art.

## Claims

1. A manuring disc (1) having a cutting edge V-shaped in cross section, for use in a manuring apparatus of the type having a number of juxtaposed discs operatively forming grooves in the soil and having nozzles arranged behind the discs for supplying manure to the grooves formed by the discs, **characterized in that** the manuring disc (1) has a relatively thin cutting body (3) having a cutting edge (4) arrowhead-shaped in cross section, the arrowhead shape having a sharp circumferential edge (5) and shoulders (6) wider than the thickness of the disc body, while replaceable supporting edges (7) extending outwards from the shoulders (6) are provided, which are attached to the disc body.

2. A manuring disc (1) according to claim 1, **characterized in that** the supporting edges (7) have an outwardly arched section (8) extending from the shoulders (6).

3. A manuring disc (1) according to claim 2, **characterized in that** the arched sections (8) each link up with a section (9) extending substantially parallel to the disc body, the latter section in turn linking up with a section (10) leading towards the disc body.

4. . A manuring disc (1) according to any one of the preceding claims, **characterized in that** the supporting edges (7) are manufactured from sheet material.

5. A manuring disc (1) according to any one of the preceding claims, **characterized in that** the supporting edges are manufactured from plastic.

6. A manuring disc (1) according to any one of claims 1 to 3 or 5, **characterized in that** the supporting edges (7) are manufactured substantially from solid material.

7. A manuring disc (1) according to claim 6, **characterized in that** the solid material is plastic with a reinforced skin.

8. A manuring disc (1) according to claim 4, **characterized in that** the edges of the supporting edges (7) proximal to the shoulders (6) are received in a form-closing manner in recesses at the outer edges of the shoulders (6).

9. A manuring disc (1) according to any one of the preceding claims, **characterized in that** the supporting edges are fastened to the disc body with detachable fasteners (12).

10. A manuring apparatus provided with a number of manuring discs (1) according to any one of claims 1 to 9.

## Patentansprüche

1. Scheibe für Jauchedrill (1), die eine Schneidkante mit V-förmigem Querschnitt aufweist, zur Verwendung in einem Jauchegerät der Art, das eine Anzahl von nebeneinander gestellten Scheiben aufweist, die im Betrieb Rillen im Boden bilden und Düsen aufweisen, die hinter den Scheiben angeordnet sind zur Zufuhr von Jauche zu den durch die Scheiben gebildeten Vertiefungen, **dadurch gekennzeichnet, dass** die Scheibe für Jauchedrill (1) einen relativ dünnen Schneidkörper (3) aufweist, der eine Schneidkante (4) mit pfeilförmigem Querschnitt aufweist, wobei die Pfeilkopfgestalt eine scharfe umfängliche Kante (5) aufweist und Schultern (6), welche breiter sind als die Dicke des Scheibenkörpers, während ersetzbare Stützkanten (7) bereitgestellt sind, die sich nach außen von den Schultern (6) erstrecken, welche an dem Scheibenkörper angebracht sind.

2. Scheibe für Jauchedrill (1) gemäß Anspruch 1, **dadurch gekennzeichnet, dass** die Stützkanten (7) einen nach außen gekrümmten Abschnitt (8) aufweisen, der sich von den Schultern (6) erstreckt.

3. Scheibe für Jauchedrill (1) gemäß Anspruch 2, **dadurch gekennzeichnet, dass** sich jeder der gekrümmten Abschnitte (8) mit einem Abschnitt (9) verbindet, der sich im Wesentlichen parallel zum Scheibenkörper erstreckt, wobei sich der letztere Abschnitt wiederum mit einem Abschnitt (10) verbindet, der in Richtung des Scheibenkörpers führt.

4. Scheibe für Jauchedrill (1) gemäß irgendeinem der vorangehenden Ansprüche, **dadurch gekennzeichnet, dass** die Stützkanten (7) aus Blechmaterial hergestellt sind.

5. Scheibe für Jauchedrill (1) gemäß irgendeinem der vorangehenden Ansprüche, **dadurch gekennzeichnet, dass** die Stützkanten aus Kunststoff hergestellt sind.

6. Scheibe für Jauchedrill (1) gemäß irgendeinem der Ansprüche 1 bis 3 oder 5, **dadurch gekennzeichnet, dass** die Stützkanten (7) im Wesentlichen aus festem Material hergestellt sind.

7. Scheibe für Jauchedrill (1) gemäß Anspruch 6, **dadurch gekennzeichnet, dass** das feste Material Kunststoff mit verstärkter Haut ist.

8. Scheibe für Jauchedrill (1) gemäß Anspruch 4, **dadurch gekennzeichnet, dass** die Kanten der Stützkanten (7) proximal den Schultern (6) in formschlüssiger Weise in Vertiefungen an den äußeren Kanten der Schultern (6) aufgenommen werden.

9. Scheibe für Jauchedrill (1) gemäß irgendeinem der vorangehenden Ansprüche, **dadurch gekennzeichnet, dass** die Stützkanten am Scheibenkörper mit lösbaren Befestigern (12) befestigt sind.

10. Jauchegerät, das mit einer Anzahl von Scheiben für Jauchedrill (1) gemäß irgendeinem der Ansprüche 1 bis 9 ausgestattet ist.

## Revendications

1. Disque (1) de fumure ayant un bord de coupe de section transversale en forme de V à utiliser dans un dispositif de fumure du type ayant un certain nombre de disques juxtaposés formant, en fonctionnement, des sillons dans le sol et ayant des buses disposées derrière les disques pour alimenter en fumier les gorges formées par les disques, **caractérisé en ce que** le disque (1) de fumure a un corps (9) de coupe relativement mince ayant une arête (4) de coupe de section transversale en forme de tête de flèche, la forme en tête de flèche ayant une arête (5) circonférentielle vive et ayant des épaulements (6) plus larges que l'épaisseur du corps du disque, tandis qu'il est prévu des bords (7) remplaçables de support qui s'étendent vers l'extérieur à partir des épaulements (6) et qui sont fixés au corps du disque.

2. Disque (1) de fumure suivant la revendication 1, **caractérisé en ce que** les bords (7) de support ont une partie (8) arquée vers l'extérieur s'étendant à partir des épaulements (6).

3. Disque (1) de fumure suivant la revendication 2, **caractérisé en ce que** les parties (8) arquées se rattachent chacune à une partie (9) s'étendant sensiblement parallèle au corps du disque, la dernière partie se rattachant à son tour à une partie (10) allant vers le corps du disque.

4. Disque (1) de fumure suivant l'une quelconque des revendications précédentes, **caractérisé en ce que** les bords (7) de support sont fabriqués dans un matériau en feuille.

5. Disque (1) de fumure suivant l'une quelconque des revendications précédentes, **caractérisé en ce que** les bords de support sont fabriqués en matière plastique.

6. Disque (1) de fumure suivant l'une quelconque des revendications 1 à 3 ou 5, **caractérisé en ce que** les bords (7) de support sont fabriqués sensiblement en un matériau plat.

7. Disque (1) de fumure suivant la revendication 6, **caractérisé en ce que** le matériau plat est de la matière plastique ayant une peau de renfort.

8. Disque (1) de fumure suivant la revendication 4, **caractérisé en ce que** les bords des bords (7) de support, à proximité des épaulements (6), sont reçus d'une manière à complémentarité de forme dans des cavités des bords extérieurs des épaulements (6).

9. Disque (1) de fumure suivant l'une quelconque des revendications précédentes, **caractérisé en ce que** les bords de support sont fixés au corps du disque par des fixations (12) amovibles.

10. Dispositif de fumure muni d'un certain nombre de disques (1) de fumure suivant l'une quelconque des revendications 1 à 9.
